# FASCICULE DE BREVET EUROPEEN

(11) **EP 3 671 913 B1**
(45) Date de publication et mention de la délivrance du brevet: **25.06.2025**
(21) Numéro de dépôt: 19218422.4
(22) Date de dépôt: 20.12.2019
(51) Int. Cl.: H01M 4/24, H01M 4/04, H01M 4/62, H01M 4/02

(54) **PROCÉDÉ DE FABRICATION D'UNE ÉLECTRODE DE ZINC PAR VOIE AQUEUSE**
HERSTELLUNGSVERFAHREN EINER ZINKELEKTRODE MITHILFE EINES WÄSSRIGEN HERSTELLUNGSPROZESSES
METHOD FOR MANUFACTURING A ZINC ELECTRODE BY WET PROCESS

(30) Priorité: 21.12.2018 FR 1873832
(43) Date de publication de la demande: 24.06.2020
(73) Titulaire: Electricité de France, 75008 Paris (FR)
(72) Inventeur: STEVENS, Philippe, 77940 NOISY RUDIGNON (FR); TOUSSAINT, Gwénaëlle, 77140 NEMOURS (FR)
(74) Mandataire: Plasseraud IP

(56) Documents cités:
- FR-A1- 2 828 336
- FR-A1- 3 034 412

## Description

### Domaine technique

L'invention relève du domaine des batteries électrochimiques et plus particulièrement d'un procédé de fabrication d'une électrode de zinc particulière.

### Technique antérieure

Les électrodes négatives en zinc métallique de piles ou de batteries sont particulièrement intéressantes parce qu'elles ont une grande capacité massique (820 Ah/kg de zinc), peuvent faire l'objet de cycles de charge/décharge en électrolyte aqueux et sont fabriquées à partir d'une matière première abondante, non toxique et peu coûteuse.

Les électrodes de zinc sont utilisées dans plusieurs types de pile utilisant un électrolyte alcalin. Par exemple, les électrodes de zinc peuvent être utilisés dans des piles zinc-dioxyde de manganèse (communément appelé « piles alcaline ») ou des piles zinc-air (utilisées par exemple dans les prothèses auditives). Ces deux exemples de piles ne sont pas conçues pour être rechargées et leur électrode négative à base de zinc fonctionne par transformation électrochimique du zinc métallique en oxyde de zinc (selon la réaction d'équation 1), ou en zincate [Zn(OH)₄]²⁻ en solution (selon la réaction d'équation 2))

Equation 1 Zn₍ₛ₎ + 2(OH)⁻_{(aq)} → ZnO₍ₛ₎ + H₂O₍ₗ₎ + 2e

Equation 2 Zn₍ₛ₎ + 4(OH)⁻_{(aq)} → [Zn(OH)₄]²⁻_{(aq)}+ 2e⁻

Les électrodes de zinc sont également utilisées comme électrodes négatives dans plusieurs types de batteries rechargeables utilisant un électrolyte alcalin, par exemple les batteries Nickel-Zinc, Argent-Zinc ou batteries Zinc-Air. Pour augmenter le nombre de cycles de charge-décharge de ces batteries, il est alors préférable que l'électrode de zinc soit principalement constituée d'oxyde de zinc (ZnO), éventuellement en mélange avec du zinc métallique (Zn). En effet, dans ces exemples de batteries rechargeables, les réactions données en équation 1) et 2) doivent pouvoir fonctionner également en sens inverse, selon les réactions d'équations 3) et 4).

Equation 3 ZnO₍ₛ₎ + H₂O₍ₗ₎ + 2e⁻ → Zn₍ₛ₎ + 2(OH)⁻_{(aq)}

Equation 4 [Zn(OH)₄]²⁻_{(aq)} + 2e⁻ → Zn₍ₛ₎ + 4(OH)⁻_{(aq)}

Lors de la décharge d'une telle batterie, de l'oxygène est réduit à l'électrode positive et le métal est oxydé à l'électrode négative :
- Décharge à l'électrode négative : M → Mⁿ⁺ + n e
- Décharge à l'électrode positive : O₂ + 2 H₂O + 4 e → 4 OH⁻

Lorsqu'une batterie métal-air doit être rechargée électriquement, le sens du courant est inversé. De l'oxygène est produit à l'électrode positive et le métal est redéposé par réduction à l'électrode négative :
- Recharge à l'électrode négative : Mⁿ⁺ + n e⁻ → M
- Recharge à l'électrode positive : 4 OH → O₂ + 2 H₂O + 4 e

L'avantage des systèmes zinc-air réside dans l'utilisation d'une électrode positive de capacité infinie. Les générateurs électrochimiques de type zinc-air sont donc connus pour leurs énergies massiques élevées, pouvant atteindre plusieurs centaines de Wh/kg. L'oxygène consommé à l'électrode positive n'a pas besoin d'être stocké dans l'électrode et peut être prélevé dans l'air ambiant.

Lors de la recharge, les ions métalliques Zn²⁺ sont réduits à l'électrode négative et se déposent sous leur forme métallique Zn dès que le potentiel au niveau de cette électrode est suffisamment négatif. Un dépôt uniforme et homogène du métal sur l'électrode est souhaité pour assurer une bonne tenue durant les cycles de charges et de décharges de cette électrode.

Or, il a été constaté que, dans certaines conditions, le métal se déposait sous forme de mousse peu adhérente à la surface de l'électrode, mousse qui pouvait ensuite se détacher de l'électrode provoquant une perte de matière active et par conséquent une perte de capacité de la batterie. Dans d'autres cas, il a été constaté que le métal pouvait également se déposer sous forme dendritique. Ces dendrites peuvent croître jusqu'à atteindre l'électrode positive pendant la charge, provoquant un court-circuit interne empêchant la recharge.

Pour tenter de résoudre ces problèmes, et produire un dépôt de zinc homogène lors de la recharge, certaines solutions ont déjà été proposées :
- le Lawrence Berkeley Laboratory (LBL) et MATSI Inc. ont cherché à augmenter la porosité dans l'électrode pour diminuer les densités de courant surfaciques responsables de la formation des dendrites, lorsqu'elles sont élevées. L'utilisation d'une électrode de zinc poreuse permet jusqu'à un certain point, de limiter la croissance de dendrite vers l'extérieur de l'électrode, car la croissance de zinc lors de la charge se fait à l'intérieur de l'électrode. Par exemple, Joseph F. Parker et al ("Rechargeable nickel-3D zinc batteries: An energy-dense, safer alternative to lithium-ion", Science 28 Apr 2017: Vol. 356, Issue 6336, pp. 415-418; DOI: 10.1126/science.aak9991) décrit une électrode de zinc fabriquée à l'état chargée sous forme d'une éponge. Toutefois, cette électrode ne doit pas être déchargée à plus de 40% de la capacité théorique de zinc dans l'électrode et perd plus de 20% de sa capacité utile après 80 cycles de charge/décharge.
- la mise en place d'un séparateur sur l'électrode a été proposé (voir par exemple H.L. Lewis et al., « Alternative separation evaluations in model rechargeable silver-zinc cells », Journal of Power Sources 80 (1999) 61-65, et E.L. Dewi et al., « Cationic polysulfoninun membrane as separator in zinc-air cell », Journal of Power Sources 115 (2003) 149-152),
- l'ajout d'additifs dans l'électrolyte a également été envisagée (voir par exemple C.W. Lee et al., « Effect of additives on the electrochemical behaviour of zinc anodes for zinc/air fuel cells », Journal of Power Sources 160 (2006) 161-164, et C.W. Lee et al., « Novel electrochemical behavior of zinc anodes in zinc/air batteries in the presence of additives », Journal of Power Sources 159 (2006) 1474-1477),
- l'ajout d'additifs dans l'électrode de zinc a également été décrit. Le brevet EP 1024545 propose, par exemple, d'ajouter un conducteur électronique ne participant pas à la réaction électrochimique. Ce conducteur électronique tel que le nitrure de titane, est ajouté sous forme de poudre. Il contribue à l'obtention d'un dépôt plus homogène et non-dendritique de zinc métallique lors de la charge,
- La demande de brevet US2018/0086646 propose la mise en œuvre de zincate de calcium dans l'électrode de zinc. Au cours de la phase de charge, les ions zincate Zn(OH)₄ présents en solution dans l'électrolyte sont réduits en zinc métallique (équation 4)), diminuant la concentration en ions zincate en solution, en particulier au voisinage immédiat du zinc métallique redéposé sur l'électrode. Cette diminution localisée de la concentration en ions zincate favorise la croissance de zinc métallique sous forme dendritique. L'ajout de cristaux de zincate de calcium Ca(OH)₂.2Zn(OH)₂.2H₂O dans l'électrode de zinc vise à augmenter localement la concentration en ions zincate. Dans la demande US2018/0086646, le zincate de calcium est obtenu à partir d'un mélange d'oxyde de zinc (ZnO), d'hydroxyde de calcium (Ca(OH)₂) et d'eau en proportion stœchiométrique dans une large quantité d'eau, à l'aide d'un mélangeur horizontal à haute énergie contenant des microbilles de zircone. La solution proposée dans cette demande nécessite toutefois un outillage spécifique qui complexifie le procédé de fabrication de l'électrode. En outre, le zincate de calcium n'est pas toujours réparti de manière homogène au sein de l'électrode ce qui ne permet pas de limiter suffisamment efficacement la formation de dendrites.

### Problème technique

Il subsiste un besoin pour de nouvelles électrodes de zinc ne provocant pas la formation d'un dépôt de zinc métallique néfaste au bon fonctionnement de la batterie, en particulier les dépôts sous forme de mousse ou de dendrites.

Une telle électrode doit permettre d'augmenter le nombre de cycles de charges et décharges électriques de la batterie zinc-air, et ainsi de conférer avantageusement à la batterie une plus grande durée de vie.

### Résumé de l'invention

Il est du mérite de la demanderesse d'avoir observé qu'en optimisant la répartition et la taille des cristaux de zincate de calcium sur l'électrode de zinc, il était possible de limiter la formation de dépôt de zinc sous forme de mousse ou de dendrites.

La présente invention propose un nouveau procédé de fabrication d'une électrode de zinc qui permet la formation *in-situ* de cristaux de zincate de calcium de taille contrôlée au sein de l'électrode de zinc, lesdits cristaux étant répartis de manière particulièrement homogène dans toute la structure de l'électrode.

### Exposé de l'invention

La présente invention a pour objet un procédé de fabrication d'une électrode de zinc, comprenant au moins les étapes suivantes :
a) la préparation d'un mélange d'oxyde de zinc (ZnO) et/ou d'un de ses précurseurs, d'hydroxyde de calcium (Ca(OH)₂) et d'eau (H₂O), le ratio molaire (ZnO/Ca(OH)2) étant compris entre 2/1 et 10/1, de préférence 3/1 et 6/1
b) le murissage du mélange préparé à l'étape a), de manière à former des cristaux de zincate de calcium Ca(OH)₂.2Zn(OH)₂.2H₂O selon la réaction de l'équation 5)

   Equation 5 : 2ZnO + Ca(OH)₂ + 4H₂O → Ca(OH)₂.2Zn(OH)₂.2H₂O,
c) l'ajout de solvant au mélange issu de l'étape b) de manière interrompre le mûrissage en ralentissant la croissance des cristaux de zincate de calcium Ca(OH)₂.2Zn(OH)₂.2H₂O, et
d) la fabrication d'une électrode de zinc au moyen du mélange comprenant des cristaux de zincate de calcium Ca(OH)₂.2Zn(OH)₂.2H₂O issu de l'étape c).

La présence de cristaux de zincate de calcium Ca(OH)₂.2Zn(OH)₂.2H₂O répartis uniformément dans la structure même de l'électrode a pour effet d'agir comme réservoir permettant de fournir des ions zincate au voisinage de l'électrode pendant la phase de réduction, par décomposition selon la réaction d'équation 6) :

Equation 6 Ca(OH)₂.2Zn(OH)₂.2H₂O + 40H⁻ → 2[Zn(OH)₄]²⁻ + Ca(OH)₂

Dans le cadre de l'invention, l'électrode de zinc réalisée au moyen du procédé précédemment décrit est constituée majoritairement d'oxyde de zinc ZnO, éventuellement en mélange avec du zinc métallique. Elle est donc fabriquée à l'état déchargée et requiert une première charge dite de « formation » pour précipiter le zinc sous forme métallique (matière active de la réaction d'oxydoréduction).

Au cours de la première phase de charge (charge de formation), plusieurs réactions permettant la formation de zinc métallique vont avoir lieu :
- la réaction de transformation d'ions zincate en zinc métallique, selon l'équation 4) précédemment décrite, qui présente la cinétique la plus rapide;
- la réaction de dissolution de l'oxyde de zinc en ions zincate selon l'équation 7) décrite ci-après, de cinétique plus lente ; et
- la réaction de transformation des cristaux de zincate de calcium en ions zincate selon l'équation 6) précédemment décrite,

   Equation 7 ZnO₍ₛ₎ + 2OH⁻_{(aq)} + H₂O → [Zn(OH)₄]²⁻_{(aq)}

Il est du mérite de la demanderesse d'avoir observé que la taille des cristaux de zincate de calcium permettait de contrôler la cinétique de leur transformation en ions zincates lors de la réduction (phase de charge). En contrôlant la taille des cristaux de zincate de calcium, il est ainsi possible d'assurer que leur transformation en ions zincates s'opère plus rapidement que la dissolution de l'oxyde de zinc, mais plus lentement que la transformation des ions zincate de l'électrolyte en zinc métallique. En d'autre termes, la taille des cristaux de zincate de calcium est contrôlée de manière à ce que la cinétique de leur transformation en ions zincate se situe entre celle de dissolution de l'oxyde de zinc et celle transformation des ions zincate de l'électrolyte en zinc métallique. Les cristaux de zincates de calcium permettent ainsi de compenser la diminution localisée en ions zincate au voisinage du zinc métallique précipité sur l'électrode, prévenant ainsi la formation de dendrites. La demanderesse a également mis au point un procédé de fabrication d'une électrode de zinc comprenant des cristaux de zincate de calcium de taille contrôlée et répartis de manière homogène, afin de contrôler la cinétique de leur transformation en ions zincate.

La présente invention a également pour objet, selon un autre aspect, une électrode de zinc susceptible d'être obtenue à partir d'un tel procédé.

L'invention a encore pour objet, selon un troisième aspect, une batterie zinc-air mettant en œuvre, comme électrode négative, au moins une électrode de zinc telle que décrite précédemment.

### Etape a

Le procédé selon l'invention met donc en œuvre une première étape de préparation d'un mélange d'oxyde de zinc (ZnO) et/ou de l'un de ses précurseurs, d'hydroxyde de calcium (Ca(OH)₂) et d'eau (H₂O).

Le précurseur de l'oxyde de zinc (ZnO) peut, par exemple, être choisi parmi le peroxyde de zinc (ZnO₂) ou un hydroxyde de zinc, tel que Zn(OH)₂.

De préférence, la première étape du procédé selon l'invention comprend la préparation d'un mélange d'oxyde de zinc (ZnO), d'hydroxyde de calcium (Ca(OH)₂) et d'eau (H₂O).

L'oxyde de zinc (ZnO) et l'hydroxyde de calcium (Ca(OH)₂) peuvent se présenter sous forme de poudres.

L'oxyde de zinc est introduit en excédant molaire dans le mélange de l'étape a). L'oxyde de zinc est notamment introduit en un ratio molaire ZnO/Ca(OH)₂ compris entre 3/1 et 10/1.

L'eau (H₂O) peut être introduite en un ratio massique H₂O/(ZnO+Ca(OH)₂) compris à 1/5 et 1/20.

Une telle quantité d'eau introduite dans le mélange de l'étape a) contribue à l'obtention d'une quantité de cristaux de zincate de calcium maîtrisée présentant les tailles souhaitées. Dans le cas où l'eau est introduite en un ratio massique supérieur à 1/1, il n'est pas possible d'obtenir une pâte permettant la fabrication d'une électrode de zinc car le mélange est alors trop liquide. La cinétique de la réaction est plus lente et la taille des cristaux de zincate de calcium difficilement contrôlable. Enfin, l'électrode de zinc obtenue à partir d'un mélange présentant une quantité d'eau trop importante comprendra moins de cristaux de zincate de calcium.

La préparation du mélange de l'étape a) peut comprendre une première sous-étape a.1). de mélange de l'oxyde de zinc et de l'hydroxyde de calcium, puis une deuxième sous-étape a.2). d'introduction de l'eau dans le mélange ainsi réalisé d'oxyde de zinc et d'hydroxyde de calcium.

Afin d'obtenir un mélange homogène de réactifs solides, le mélange de la sous-étape a.1) est réalisé sous agitation pendant un temps compris entre 1 min et 10 min, de préférence entre 2 min et 7 min.

Selon le procédé de l'invention, l'eau introduite à la sous-étape a.2) peut être par exemple de l'eau déminéralisée, de l'eau distillée, de l'eau sur résine, de l'eau désionisée et de préférence de l'eau désionisée.

Une fois que l'eau est ajoutée à la préparation du mélange de l'étape a), la formation de cristaux de zincate de calcium commence.

### Etape b

Le procédé selon l'invention met ainsi en œuvre une seconde étape de murissage du mélange préparé à l'étape a), de manière à former des cristaux de zincate de calcium Ca(OH)₂.2Zn(OH)₂.2H₂O selon la réaction de l'équation 5)

Equation 5 : 2ZnO + Ca(OH)₂ + 4H₂O → Ca(OH)₂.2Zn(OH)₂.2H₂O

L'étape b) de murissage permet de fabriquer in-situ des cristaux de zincate de calcium de taille optimale, en particulier pour prévenir la croissance dendritique de zinc au cours de la charge.

La présence de cristaux zincate de calcium de taille contrôlée est importante pour optimiser la cinétique de production d'ion zincate et prévenir la formation de dendrites.

Des cristaux trop petits, en particulier présentant une taille moyenne en nombre est inférieure à 10 µm, auront tendance à être consommés rapidement et totalement selon la réaction d'équation 6) de formation des ions zincates. Dans ce cas, la réaction de dissolution de l'oxyde de zinc en ions zincate selon l'équation 7), de cinétique plus lente, n'a pas le temps de s'opérer et l'oxyde de zinc reste inactif. En outre, si les cristaux de zincate de calcium sont entièrement consommés lors de la phase de charge, les points de nucléation pour leur croissance au cours de l'étape subséquente de décharge selon la réaction d'équation 8) décrite ci-après, auront disparu. En effet, la réaction d'équation 8) est amorcée plus efficacement et de manière plus homogène en présence de cristaux de zincate de calcium résiduels au sein de l'électrode.

Equation 8 2Zn₍ₛ₎ + 4(OH)⁻_{(aq)} + Ca(OH)₂ + 2H₂O → Ca(OH)₂.2Zn(OH)₂.2H₂O + 4e⁻

A l'inverse, si les cristaux de zincate de calcium sont trop gros, en particulier présentant une taille moyenne en nombre supérieure à 200 µm, la cinétique de la réaction d'équation 6) est ralentie. En effet, leur faible surface spécifique (ratio surface/volume) ralentit leur dissolution. Dans ce cas, la diminution de concentration en ions zincate de l'électrolyte au voisinage immédiat de l'électrode n'est plus compensée, ce qui entraîne de nouveau la formation de dendrites.

Selon un mode particulier de réalisation, l'étape de murissage est conduite jusqu'à l'obtention de cristaux présentant une taille moyenne en nombre comprise entre 10 et 200 µm, de préférence 20 et 100 µm, de préférence 30 et 80 µm et de préférence 40 et 60 µm.

L'étape de murissage (étape b) peut se faire sous agitation à température ambiante pendant une durée permettant la croissance des cristaux de taille souhaitée. En particulier, L'étape de murissage est opérée à une température comprise entre 20 et 35°C, de préférence comprise entre 20 et 25°C. De préférence, l'étape de murissage est conduite pendant un temps compris entre 3 min et 20 min, de préférence entre 5 min et 10 min.

La formation des cristaux de zincate de calcium peut être contrôlée pendant toute la durée de l'étape b) de murissage. En particulier, la formation des cristaux de zincate de calcium se traduit par une augmentation de la viscosité du mélange au cours de l'étape b). Il est ainsi possible de suivre la formation des cristaux de zincate de calcium en mesurant par exemple la viscosité du mélange de l'étape b) de façon continue ou en réalisant plusieurs prélèvements à des intervalles de temps réguliers.

Les cristaux de zincate de calcium obtenus grâce au procédé selon l'invention peuvent être caractérisés par exemple par microscopie électronique à balayage ou par analyse dispersive en énergie, EDS ou EDX pour « energy dispersive X-ray spectrometry ».

Une fois que les cristaux de zincate de calcium ont atteint la taille souhaitée, l'étape b) de murissage est interrompue par ajout d'un solvant à l'étape c).

### Etape c

Le procédé selon l'invention met en œuvre une troisième étape d'ajout de solvant au mélange issu de l'étape b) de manière à interrompre le mûrissage en ralentissant la croissance des cristaux de zincate de calcium Ca(OH)₂.2Zn(OH)₂.2H₂O

Le solvant de l'étape c) neutralise les précurseurs restant après la réaction de murissage de l'étape b). La neutralisation des précurseurs permet notamment de ralentir la croissance des cristaux de zincate de calcium, pour permettre la fabrication de l'électrode. L'ajout du solvant permet ainsi de contrôler la formation des cristaux de zincate de calcium, notamment en taille et en nombre.

L'étape de murissage courte suivi d'une étape d'arrêt de la croissance de zincate de calcium par ajout de solvant permet d'obtenir un mélange optimal d'oxyde de zinc, hydroxyde de calcium et zincate de calcium.

Le solvant ajouté à l'étape c) peut être de façon générale une molécule miscible avec l'eau présentant la fonction hydroxyle, c'est-à-dire un alcool, et de préférence, le solvant peut être de l'éthanol.

Le solvant ajouté à l'étape c) est différent de l'eau et ne devrait pas entrainer une diminution trop importante de la viscosité du mélange issu de l'étape b). En particulier, le solvant peut être introduit de façon à diminuer la viscosité du mélange issu de l'étape b) entre 1 et 5 %, et de préférence 2 et 3 %.

### Etape d

Le procédé selon l'invention comprend enfin une étape d) de fabrication d'une électrode de zinc au moyen du mélange comprenant des cristaux de zincate de calcium Ca(OH)₂.2Zn(OH)₂.2H₂O obtenu à l'issu de l'étape c).

Outre les cristaux de zincate de calcium, le mélange issu de l'étape c) comprend également de l'oxyde de zinc (ZnO) ou l'un de ses précurseurs, de l'eau (H₂O), et une teneur résiduelle (par exemple inférieure à 5%) en hydroxyde de calcium (Ca(OH)₂) et un solvant. Ce mélange aqueux, ci-après dénommé « masse active » permet de réaliser une électrode de zinc comprenant *in-situ* des cristaux de zincate de calcium.

De façon avantageuse, l'oxyde de zinc et/ou un de ses précurseurs introduit au mélange de l'étape a) n'est pas entièrement consommé par la réaction de formation de cristaux de zincate de calcium. Il est alors possible de fabriquer une électrode de zinc directement à partir de la « masse active. »

La mise en œuvre du procédé selon l'invention permet une répartition uniforme des cristaux de zincate de calcium au sein de l'électrode de zinc. Cette répartition contrôlée permet d'éviter la formation de points de charge non-homogènes qui favorisent un dépôt de zinc et la formation de dendrites.

Dans une première sous-étape d.1), la masse active peut être passée dans une calandreuse afin de la lisser, la lustrer et d'en faire une feuille d'une épaisseur prédéterminée.

Dans une deuxième sous-étape d.2), la masse active sous forme de feuille peut être pressée à travers une grille ou une mousse afin de lui donner sa forme et sa géométrie finale. Cette sous-étape d.2) est effectuée de préférence en moins de quatre heures, en particulier en moins de deux heures, et plus préférentiellement en moins d'une heure, pour éviter le durcissement de l'électrode au cours de sa mise en forme.

Dans une troisième sous-étape d.3), la masse active peut ensuite être séchée, par exemple à l'air libre ou en étuve sèche, afin de former une électrode de zinc.

L'électrode de zinc ainsi obtenue peut alors être intégrée dans une batterie électrochimique.

### Liant

Afin d'assurer une bonne cohésion de l'électrode de zinc obtenue par un procédé tel que décrit dans ce présent document, le procédé de fabrication de l'électrode de zinc peut comprendre en outre l'ajout d'un liant à l'une quelconque des étapes du procédé. De préférence, le liant est ajouté à l'étape b) de murissage.

Le liant peut être choisi parmi les liants vinylique, les liants acryliques, les liants alkides et glycérophtaliques, de préférence le liant peut être choisi parmi le siloxane, l'époxydique, le polyuréthane, l'huile de lin, la cire d'abeille ou du polytétrafluoroéthylène (PTFE) et de préférence le liant est du PTFE.

Dans le cas où le liant est ajouté à l'étape b) de murissage, le mélange peut être agité pendant un temps d'au moins 3 min, et de préférence un temps d'au moins 5 min. De cette façon, le liant est réparti de façon uniforme dans tout le mélange.

Le liant peut être ajouté selon un ratio massique liant/(eau + oxyde de zinc + hydroxyde de calcium) compris entre 10 et 90 % et plus particulièrement un ratio massique de 10, 15, 20, 25, 30, 35, 40, 45, 50, 55, 60, 65, 70, 75, 80, 85 ou 90 %, et de préférence compris entre 15 et 25 %.

Dans le cas où le liant utilisé est du PTFE, il peut être introduit préférentiellement sous la forme d'une suspension aqueuse à une concentration comprise entre 40 et 80 %, et de préférence 60 %.

### Autres additifs

L'électrode de zinc peut également comprendre tout autre additif usuellement mis en œuvre par l'homme du métier.

Par exemple, pour améliorer la percolation du mélange, il est également possible d'ajouter à l'une quelconque des étapes du procédé de fabrication de l'électrode de zinc un additif tel que l'oxyde de bismuth, l'oxyde de mercure, l'hydroxyde d'indium ou un conducteur électronique quelconque, ou un mélange de ceux-ci.

En outre, pour protéger le collecteur de courant de la corrosion, du zinc métallique (par exemple sous forme de poudre de zinc), peut également être ajouté à l'électrode.

De préférence, cet ajout se fait à l'étape a) ou entre l'étape c) et l'étape d), et de préférence à l'étape a) de préparation du mélange.

Electrode de zinc et batterie zinc-air

L'invention a également pour objet une électrode de zinc susceptible d'être obtenue au moyen d'un procédé tel que décrit précédemment, ainsi qu'une batterie zinc-air comprenant, comme électrode négative, au moins une électrode de zinc.

En particulier, l'électrode de de zinc susceptible d'être obtenue au moyen d'un procédé tel que décrit précédemment comprend de 20 à 45% en poids, de préférence de 30 à 40% en poids de cristaux de zincates de calcium.

En particulier, la batterie zinc-air comprend :
- une borne négative,
- une borne positive,
- une électrode négative, connectée à la borne négative,
- une électrode positive à air
ladite électrode négative étant une électrode de zinc telle que décrite précédemment.

L'électrode positive de la batterie selon l'invention peut être une électrode à air. Une électrode à air est une structure solide poreuse en contact avec l'électrolyte liquide. L'interface entre l'électrode à air et l'électrolyte liquide est une interface dite « à triple contact » où sont présents simultanément la matière solide active de l'électrode, l'oxydant gazeux, c'est-à-dire l'air, et l'électrolyte liquide. Une description des différents types d'électrodes à air pour batteries zinc-air est exposée par exemple dans l'article bibliographique de V. Neburchilov et al., intitulé « A review on air cathodes for zinc-air fuel cells », Journal of Power Sources 195 (2010) p. 1271-1291. N'importe quel type d'électrode à air peut être utilisé dans la batterie selon la présente invention. En particulier, la première électrode positive à air de la batterie peut être une électrode obtenue par agglomération d'une poudre de carbone constituée de grains de carbone à haute surface spécifique, telle que décrite dans la demande de brevet WO 2000/036677. L'électrode à air, à base de particules de carbone, peut contenir en outre au moins un catalyseur de réduction d'oxygène. Ce catalyseur de réduction d'oxygène est de préférence choisi dans le groupe constitué par l'oxyde de manganèse et l'oxyde de cobalt.

Outre l'électrode à air, la batterie selon l'invention peut comprendre une seconde électrode positive qui est une électrode de dégagement d'oxygène. N'importe quel type d'électrode remplissant cette fonction connue par l'homme du métier peut être utilisé dans la batterie selon la présente invention. La seconde électrode positive de dégagement d'oxygène peut par exemple être une électrode métallique stable dans l'électrolyte de la batterie, tel qu'une électrode en argent, en nickel ou en acier inoxydable.

Lorsqu'elle comprend deux électrodes positives, la batterie selon l'invention peut comprendre au moins un moyen de commutation permettant de connecter à la borne positive, soit la première électrode positive à air, soit la seconde électrode positive de dégagement d'oxygène et un moyen de charge de la batterie, pouvant être connecté à l'électrode négative et à la seconde électrode positive à dégagement d'oxygène.

### Brève description des dessins

### Fig. 1

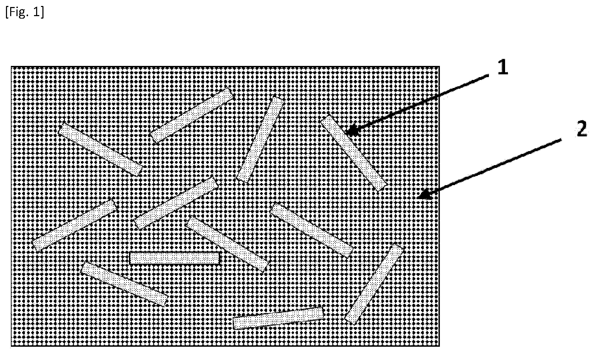

[Fig. 1] présente une illustration des cristaux de zincate de calcium Ca(OH)2.2Zn(OH)2.2H20 (1) formés au cours de l'étape b) selon le procédé de la présente invention. Lesdits cristaux sont formés in-situ dans le mélange d'oxyde de zinc (ZnO), d'hydroxyde de calcium (Ca(OH)₂) et d'eau (H₂O) (2).

### Exemples

On a préparé une électrode de zinc au moyen du procédé selon l'invention.

Dans le cas du présent exemple, les quantités présentées dans le tableau 1 de réactifs ont été utilisées.

**[Tableau 1]**

| **Réactif** | **Quantité** |
|---|---|
| ZnO | 150 g |
| Ca(OH)₂ | 30 g |
| Eau désionisée | 30 mL |
| PTFE | 20 mL |
| Ethanol | 30 mL |

La poudre d'oxyde de zinc (Merck emsure) est mélangée mécaniquement à l'hydroxyde de calcium (Merck) pendant cinq minutes dans un malaxeur à 23 °C. Tout en maintenant le malaxeur en fonctionnement, l'eau désionisée est ajoutée à vitesse constante au mélange sur une durée de trente secondes, en s'assurant de la bonne homogénéité du mélange. L'ajout d'eau amorce la formation des cristaux de zincates de calcium.

Le mélange est maintenu sous agitation pendant trois minutes. Puis, une suspension aqueuse de PTFE à une concentration de 60 % (Aldrich) est ajoutée sur une durée d'une minute.

Le mélange est à nouveau maintenu sous agitation pendant cinq minutes au cours desquelles, les cristaux de zincate de calcium poursuivent leur formation et leur croissance.

La réaction de murissage est interrompue par ajout d'éthanol sur une durée de dix secondes.

Le mélange obtenu est ensuite passé dans une calandreuse, pressé et séché pour former une électrode de zinc à l'état déchargé.

## Revendications

1. Procédé de fabrication d'une électrode de zinc, comprenant au moins les étapes suivantes :
a) la préparation d'un mélange d'oxyde de zinc (ZnO) et/ou d'un de ses précurseurs, d'hydroxyde de calcium (Ca(OH)₂) et d'eau (H₂O), le ratio molaire (ZnO/Ca(OH)₂) étant compris entre 3/1 et 10/1, le ratio massique H₂O/(ZnO+Ca(OH)₂) étant compris entre 1/5 et 1/20,
b) le murissage du mélange préparé à l'étape a), de manière à former des cristaux de zincate de calcium Ca(OH)₂.2Zn(OH)₂.2H₂O selon la réaction de l'équation 5)
Equation 5 : 2ZnO + Ca(OH)₂ + 4H₂O → Ca(OH)₂.2Zn(OH)₂.2H₂O,
c) l'ajout de solvant au mélange issu de l'étape b) de manière à interrompre le mûrissage en ralentissant la croissance des cristaux de zincate de calcium Ca(OH)₂.2Zn(OH)₂.2H₂O, et
d) la fabrication d'une électrode de zinc au moyen du mélange comprenant des cristaux de zincate de calcium Ca(OH)₂.2Zn(OH)₂.2H₂O issu de l'étape c).

2. Procédé selon la revendication 1, **caractérisé en ce que** l'étape b) de murissage est réalisée à température ambiante, en particulier comprise entre 20 et 35°C, de préférence comprise entre 20 et 25°C.

3. Procédé selon l'une quelconque des revendications précédentes, **caractérisé en ce que** l'étape b) de murissage est réalisée pendant un temps compris entre 3 min et 20 min, de préférence entre 5 min et 10 min.

4. Procédé selon l'une quelconque des revendications précédentes, **caractérisé en ce que** le solvant ajouté à l'étape c) est un alcool, de préférence de l'éthanol.

5. Procédé selon l'une quelconque des revendications précédentes, **caractérisé en ce que** les cristaux de l'étape d) ont une taille moyenne en nombre comprise entre 10 et 200 µm, de préférence 20 et 100 µm, de préférence 30 et 80 µm et de préférence 40 et 60 µm.

6. Procédé selon l'une quelconque des revendications précédentes, **caractérisé en ce que** la fabrication de l'électrode de l'étape d) comprend au moins les trois sous-étapes suivantes :
d.1). passage du mélange obtenu en étape c) dans une calandreuse,
d.2). pressage du mélange de la sous-étape d.1),
d.3). séchage du mélange pressé de la sous-étape d.2).

7. Procédé selon l'une quelconque des revendications précédentes, **caractérisé en ce qu'**un liant est ajouté à l'une quelconque des étapes a) à d), et de préférence un liant est ajouté à l'étape b).

8. Procédé selon la revendication 7, **caractérisé en ce que** le liant est du polytétrafluoroéthylène (PTFE).

9. Procédé selon l'une quelconque des revendications précédentes, **caractérisé en ce qu'**un autre additif est ajouté à l'une quelconque des étapes a) à d), et de préférence un à l'étape a).

10. Procédé selon la revendication 9, **caractérisé en ce que** l'additif est choisi parmi l'oxyde de bismuth, l'oxyde de mercure, l'hydroxyde d'indium ou un conducteur électronique quelconque, ou un mélange de ceux-ci.

11. Electrode de zinc susceptible d'être obtenue au moyen d'un procédé de fabrication selon l'une quelconque des revendications 1 à 10.

12. Batterie zinc-air comprenant, comme électrode négative, au moins une électrode de zinc selon la revendication 11.

## Patentansprüche

1. Verfahren zur Herstellung einer Zinkelektrode, welches wenigstens die folgenden Schritte umfasst:
a) Herstellen einer Mischung aus Zinkoxid (ZnO) und/oder einem seiner Vorläufer, Calciumhydroxid (Ca(OH)₂) und Wasser (H₂O), wobei das Molverhältnis (ZnO/Ca(OH)₂) zwischen 3/1 und 10/1 liegt, das Massenverhältnis H₂O/(ZnO+Ca(OH)₂) zwischen 1/5 und 1/20 liegt,
b) Reifung der in Schritt a) hergestellten Mischung, so dass sich Calciumzinkatkristalle Ca(OH)₂.2Zn(OH)₂.2H₂O gemäß der Reaktion der Gleichung 5) bilden
Gleichung 5: 2ZnO + Ca(OH)₂ + 4H₂O → Ca(OH)₂.2Zn(OH)₂.2H₂O,
c) Zugabe von Lösungsmittel zu der Mischung aus Schritt b), um die Reifung durch Verlangsamung des Wachstums der Calciumzinkatkristalle Ca(OH)₂.2Zn(OH)₂.2H₂O zu unterbrechen, und
d) Herstellung einer Zinkelektrode aus der Mischung, die Calciumzinkatkristalle Ca(OH)₂.2Zn(OH)₂.2H₂O aus Schritt c) enthält.

2. Verfahren nach Anspruch 1, **dadurch gekennzeichnet, dass** der Reifeschritt b) bei Raumtemperatur, insbesondere zwischen 20 und 35 °C, bevorzugt zwischen 20 und 25 °C, durchgeführt wird.

3. Verfahren nach einem der vorhergehenden Ansprüche, **dadurch gekennzeichnet, dass** der Reifeschritt b) während einer Zeit zwischen 3 min und 20 min, bevorzugt zwischen 5 min und 10 min, durchgeführt wird.

4. Verfahren nach einem der vorhergehenden Ansprüche, **dadurch gekennzeichnet, dass** das in Schritt c) zugesetzte Lösungsmittel ein Alkohol, bevorzugt Ethanol, ist.

5. Verfahren nach einem der vorhergehenden Ansprüche, **dadurch gekennzeichnet, dass** die Kristalle aus Schritt d) eine durchschnittliche Größe zwischen 10 und 200 µm, bevorzugt zwischen 20 und 100 µm, bevorzugt zwischen 30 und 80 µm und bevorzugt zwischen 40 und 60 µm aufweisen.

6. Verfahren nach einem der vorhergehenden Ansprüche, **dadurch gekennzeichnet, dass** die Herstellung der Elektrode in Schritt d) wenigstens die folgenden drei Teilschritte umfasst:
d.1). Durchleiten der in Schritt c) erhaltenen Mischung durch einen Kalander,
d.2). Pressen der Mischung aus dem Teilschritt d.1),
d.3). Trocknen der gepressten Mischung aus dem Teilschritt d.2).

7. Verfahren nach einem der vorhergehenden Ansprüche, **dadurch gekennzeichnet, dass** in einem der Schritte a) bis d) ein Bindemittel zugegeben wird, wobei bevorzugt in Schritt b) ein Bindemittel zugegeben wird.

8. Verfahren nach Anspruch 7, **dadurch gekennzeichnet, dass** das Bindemittel Polytetrafluorethylen (PTFE) ist.

9. Verfahren nach einem der vorhergehenden Ansprüche, **dadurch gekennzeichnet, dass** in einem der Schritte a) bis d) ein weiterer Zusatzstoff zugegeben wird, bevorzugt in Schritt a).

10. Verfahren nach Anspruch 9, **dadurch gekennzeichnet, dass** der Zusatzstoff aus Bismutoxid, Quecksilberoxid, Indiumhydroxid oder einem beliebigen elektronischen Leiter oder einer Mischung davon gewählt ist.

11. Zinkelektrode, die durch ein Herstellungsverfahren nach einem der Ansprüche 1 bis 10 erhalten werden kann.

12. Zink-Luft-Batterie, die als negative Elektrode wenigstens eine Zinkelektrode nach Anspruch 11 umfasst.

## Claims

1. A production method for a zinc electrode, comprising at least the following steps:
a) preparation of a mixture of zinc oxide (ZnO) and/or one of the precursors thereof, calcium hydroxide (Ca(OH)₂) and water (H₂O), the molar ratio (ZnO/Ca(OH)₂) being comprised between 3/1 and 10/1, the mass ratio H₂O/(ZnO+Ca(OH)₂) being comprised between 1/5 and 1/20,
b) ripening of the mixture prepared in step a), so as to form calcium zincate crystals Ca(OH)₂·2Zn(OH)₂·2H₂O according to the reaction from equation 5
Equation 5 2ZnO + Ca(OH)₂ + 4H₂O → Ca(OH)₂·2Zn(OH)₂·2H₂O,
c) addition of solvent to the mixture coming from step b) so as to interrupt the ripening by slowing the growth of the calcium zincate crystals Ca(OH)₂·2Zn(OH)₂·2H₂O, and
d) production of a zinc electrode by means of the mixture comprising calcium zincate crystals Ca(OH)₂·2Zn(OH)₂·2H₂O from step c).

2. The method according to claim 1, **characterized in that** the ripening step b) is done at ambient temperature, in particular comprised between 20 and 35°C, preferably comprised between 20 and 25°C.

3. The method according to any one of the preceding claims, **characterized in that** the ripening step b) is executed for a time comprised between 3 minutes and 20 minutes, preferably between 5 minutes and 10 minutes.

4. The method according to any one of the preceding claims, **characterized in that** the solvent added in step c) is an alcohol, preferably ethanol.

5. The method according to any one of the preceding claims, **characterized in that** the crystals from step d) have an average size by number comprised between 10 and 200 µm, preferably 20 and 100 µm, preferably 30 and 80 µm and preferably 40 and 60 µm.

6. The method according to any one of the preceding claims, **characterized in that** the production of the electrode for step d) comprises at least the three following sub-steps:
d.1) passage of the mixture obtained in step c) in a calender;
d.2) pressing of the mixture from the sub-step d.1);
d.3) drying of the mixture from the sub-step d.2);

7. The method according to any one of the preceding claims, **characterized in that** a binder is added in any one of steps a) to d), and preferably a binder is added in step b).

8. The method according to claim 7, **characterized in that** the binder is polytetrafluoroethylene (PTFE).

9. The method according to any one of the preceding claims, **characterized in that** another additive is added in any one of steps a) to d), and preferably in step a).

10. The method according to claim 9, **characterized in that** the additive is selected from bismuth oxide, mercury oxide, indium hydroxide or an arbitrary electronic conductor, or a mixture thereof.

11. Zinc electrode obtainable by means of a production method according to any one of claims 1 to 10.

12. A zinc-air battery comprising at least one zinc electrode according to claim 11 as negative electrode.
